# EUROPEAN PATENT APPLICATION

(11) **EP 4 693 110 A1**
(43) Date of publication of application: **11.02.2026**
(21) Application number: 25190638.4
(22) Date of filing: 21.07.2025
(51) Int. Cl.: G06N 3/098

(54) **INFORMATION PROCESSING APPARATUS, INFORMATION PROCESSING SYSTEM, INFORMATION PROCESSING METHOD, AND CARRIER MEDIUM**

(30) Priority: 09.08.2024 JP 2024134267
(71) Applicant: Ricoh Company, Ltd., Tokyo 143-8555 (JP)
(72) Inventor: TAKAGI, Satoshi, Tokyo, 143-8555 (JP)
(74) Representative: SSM Sandmair

(57) **Abstract**

An information processing apparatus (10) to communicate, via a network, with another information processing apparatus (20) participating in federated learning includes an acquisition unit (103) to acquire client-related information generated based on information registered by a client from the another information processing apparatus (20), an evaluation unit (105) to evaluate a degree of similarity between the client-related information on the another information processing apparatus (20) and the client-related information on one or more partner candidates for the federated learning, and an output unit (106) to output screen data for displaying a screen allowing selection of one or more partners for the federated learning, based on the degree of similarity.

## Description

### BACKGROUND

### Technical Field

The present disclosure relates to an information processing apparatus, an information processing system, an information processing method, and a carrier medium.

### Related Art

A machine learning approach called federated learning has been proposed. In the federated learning, machine learning is performed while keeping data held by multiple entities such as enterprises localized on each entity, without centralizing the data. The federated learning enables the implementation of a model that takes advantage of data among multiple clients as if the data were linked while ensuring privacy and security.

Japanese Unexamined Patent Application Publication No. 2022-076277 discloses a method for providing data of a trained model generated based on distributed learning. In the method of providing data disclosed in Japanese Unexamined Patent Application Publication No. 2022-076277, multiple nodes train respective local models using pieces of local data processed by the respective nodes. Data in a global model is updated based on the data in the local models acquired from the respective nodes. The data in the local models and the data in the global model are stored in association with version information. Data in a model selected out of the global model and the local models associated with different version information is distributed to the nodes or other devices.

However, according to the techniques in the related art, it is difficult to appropriately select a partner for the federated learning. For example, according to the techniques in the related art, the partner for the federated learning is selected by a user based on client-related information. However, it is difficult to appropriately select a partner for the federated learning based only on the client related information.

### SUMMARY

The present disclosure described herein provides an information processing apparatus to communicate, via a network, with another information processing apparatus participating in federated learning including an acquisition unit to acquire client-related information generated based on information registered by a client from the another information processing apparatus, an evaluation unit to evaluate a degree of similarity between the client-related information on the another information processing apparatus and the client-related information on one or more partner candidates for the federated learning, and an output unit to output screen data for displaying a screen allowing selection of one or more partners for the federated learning, based on the degree of similarity.

In another aspect, an information processing system includes a first information processing apparatus participating in federated learning and a second information processing apparatus described above. The first information processing apparatus and the second information processing apparatus are communicable with each other via a network. The first information processing apparatus includes a communication control unit to transmit client-related information generated based on information registered by a client to the second information processing apparatus. The second information processing apparatus includes an acquisition unit to acquire the client-related information from the first information processing apparatus, an evaluation unit to evaluate a degree of similarity between the client-related information on the first information processing apparatus and the client-related information on one or more partner candidates for the federated learning, and an output unit to output screen data for displaying a screen allowing selection of one or more partners for the federated learning, based on the degree of similarity.

In another aspect, an information processing method executed by a computer to communicate, via a network, with an information processing apparatus participating in federated learning includes acquiring client-related information generated based on information registered by a client from the information processing apparatus, evaluating a degree of similarity between the client-related information on the information processing apparatus and the client-related information on one or more partner candidates for the federated learning, and outputting screen data for displaying a screen allowing selection of one or more partners for the federated learning, based on the degree of similarity.

In another aspect, a carrier medium carries computer readable code for controlling a computer system to carry out a method including acquiring, via a network, client-related information generated based on information registered by a client from an information processing apparatus participating in federated learning, evaluating a degree of similarity between the client-related information on the information processing apparatus and the client-related information on one or more partner candidates for the federated learning, and outputting screen data for displaying a screen allowing selection of one or more partners for the federated learning, based on the degree of similarity.

According to one aspect of the present disclosure, the partner for the federated learning is appropriately selected.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an overall configuration of a federated learning system;
FIG. 2 is a block diagram illustrating a hardware configuration of a computer;
FIG. 3 is a block diagram illustrating a functional configuration of a federated learning system;
FIG. 4 is a flowchart of a federated learning method;
FIG. 5 is a flowchart of a registration process of a general-purpose model;
FIG. 6 is a diagram illustrating a general-purpose model addition application screen;
FIG. 7 is a flowchart of a selection process of a federation partner;
FIG. 8 is a diagram illustrating a first example of a federation model selection;
FIG. 9 is a diagram illustrating a second example of a federation model selection screen;
FIG. 10 is a diagram illustrating screen a third example of a federation model selection;
FIG. 11 is a diagram illustrating a fourth example of a federation model selection screen; and
FIG. 12 is a flowchart of a process of federated learning.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described in detail below with reference to the drawings. In the drawings, like reference numerals denote like elements, and redundant descriptions thereof may be omitted in the following description.

An information processing system for generating a machine learning model through federated learning is described. In the following description, the information processing system is referred to as a "federated learning system." The federated learning system has a function of selecting a partner (also referred to as a "federation partner" in the following description) with whom the federated learning is conducted when the federated learning is started. Users who use the federated learning system are allowed to select one or more clients as federation partners from among multiple clients participating in the federated learning.

In the related art, it is assumed that all clients participating in the federated learning work on the same task. When the federated learning is started, it is not necessary to consider the difference of the task. Accordingly, for example, the federation partner is selected in consideration of the business type, the task type, or the number of data items. In practice, however, since each client has a different task to work on, the federated learning to be conducted among clients working on different tasks has been sought for.

In recent years, for example, a technique of distillation learning has enabled the federated learning among clients working on different tasks. However, in the federated learning conducted among the federation partners working on different tasks, it is unclear whether the accuracy of the model is expected to be increased through the federated learning conducted among the federation partners selected based only on, for example, the business type, the task type, or the number of data items. In view of this, it is difficult to select appropriate federation partners.

An object of one or more aspects is to appropriately select a partner for the federated learning. In view of this, client-related information generated based on information registered by each client is obtained from each client, and screen data for displaying a screen that allows selection of a federation partner from among multiple clients is output based on the degree of similarity of the client-related information.

In one aspect of the present disclosure, since the screen allowing selection of a federation partner is displayed based on the degree of similarity of the client-related information, the federation partner can be appropriately selected. In another aspect of the present disclosure, since the federated learning is conducted with an appropriate federation partner, the accuracy of the machine learning model is increased even through the federated learning conducted among the federation partners working on different tasks.

### Overall Configuration of Federated Learning System

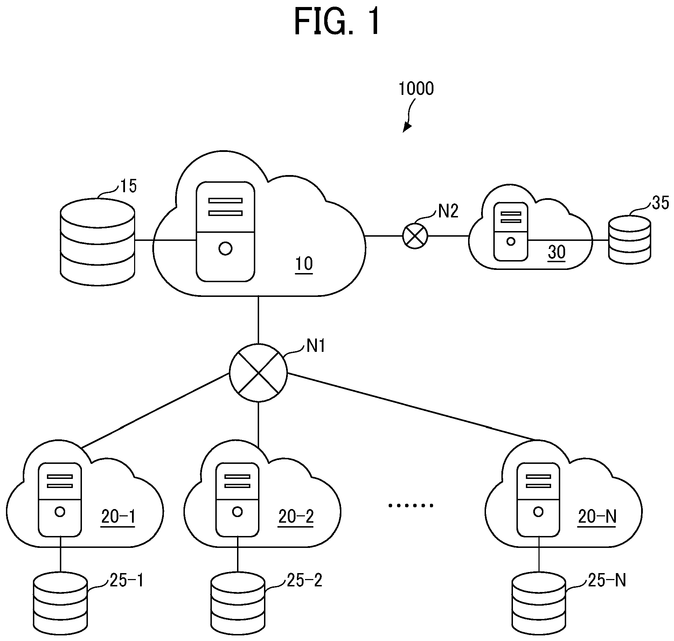

An overall configuration of the federated learning system is described below with reference to FIG. 1. FIG. 1 is a schematic diagram illustrating an overall configuration of a federated learning system 1000.

As illustrated in FIG. 1, the federated learning system 1000 includes a central apparatus 10, a central storage device 15, multiple client apparatuses 20-1 to 20-N, multiple client storage devices 25-1 to 25-N, a client apparatus 30, and a client storage device 35. In the following description, the client apparatuses 20-1 to 20-N may be collectively referred to as "client apparatuses 20," and each of which may be referred to as a "client apparatus 20" unless particularly distinguished from one another. Similarly, the client storage devices 25-1 to 25-N may be collectively referred to as "client storage devices 25,"and each of which may be referred to as a "client storage device 25" unless particularly distinguished from one another. The "N" is an integer of two or more.

The central apparatus 10 and the client apparatuses 20 are connected to a communication network N1. The central apparatus 10 and the client apparatus 30 are connected to a communication network N2. Each of the communication networks N1 and N2 enables the connected apparatuses to communicate with one another. The communication networks N1 and N2 may be integrated into one communication network.

Each of the communication networks N1 and N2 is, for example, a wired communication network such as the Internet, a local area network (LAN), or a wide area network (WAN). The communication network N1 may include not only the wired communication network but also a wireless communication network such as a wireless LAN or a short-range wireless communication, or a mobile communication network such as Worldwide Interoperability for Microwave Access (WiMAX), Long Term Evolution (LTE), or the fifth generation (5G).

The central apparatus 10 and the central storage device 15 are electrically connected to each other. The client apparatuses 20 are electrically connected to the corresponding client storage devices 25, respectively. The client apparatus 30 and the client storage device 35 are electrically connected to each other. The central storage device 15, the client storage devices 25, and the client storage device 35 may be connected to the communication network N1 or N2.

The central apparatus 10 is an example of an information processing apparatus that generates a central model. An example of the central apparatus 10 is a computer such as a personal computer, a workstation, or a server. The central apparatus 10 is a server that participates in the federated learning.

The central model is a machine learning model obtained by integrating respective client models generated by the client apparatuses 20-1 to 20-N. Examples of the machine learning model include a neural network, a deep neural network, a support vector machine, and random forest.

The central storage device 15 is an example of a storage device that stores the central model. An example of the central storage device 15 is an external storage device such as a disk array or a network attached storage (NAS). The central storage device 15 may be built in the central apparatus 10.

The client apparatus 20 is an information processing apparatus that generates a client model. An example of the client apparatus 20 is a computer such as a personal computer, a workstation, or a server. The client apparatus 20 is a node that participates in the federated learning. The client apparatus 20 may execute a predetermined task using the trained central model or the trained client model. In the following description, the trained central model and the trained client model may be collectively referred to as a "trained model."

The client model is a machine learning model generated using client data. The client data is a data set used for training a client model. For example, the client data is prepared in advance by a user of the client apparatus 20. The contents of the client data vary depending on a task to be executed using the client model.

The client data may include, for example, a data set that is publicly available on the web and used for general purposes. This type of data set is referred to as a "general-purpose data set" in the following description. The general-purpose data set may be prepared based on an application (or request) from the client apparatus 20.

The client storage device 25 is an example of a storage device that stores the client model and the client data. An example of the client storage device 25 is an external storage device such as a disk array or an NAS. The client storage device 25 may be built in the client apparatus 20.

The client apparatus 30 is an example of an information processing apparatus that takes advantage of the trained model. An example of the client apparatus 30 is a computer such as a personal computer, a workstation, or a server. The client apparatus 30 does not participate in the federated learning and executes a predetermined task using the trained model generated through the federated learning. The client apparatus 30 may not be included in the federated learning system 1000.

The client storage device 35 is an example of a storage device that stores the trained model. An example of the client storage device 35 is an external storage device such as a disk array or an NAS. The client storage device 35 may be built in the client apparatus 30. In the case where the client apparatus 30 is not included in the federated learning system 1000, the client storage device 35 may not be included in the federated learning system 1000 either.

The central apparatus 10, the client apparatus 20, or the client apparatus 30 is any apparatus other than a computer as long as the apparatus has a communication function. Other examples of the central apparatus 10, the client apparatus 20, or the client apparatus 30 include, but not limited to, an output device such as an image forming apparatus (e.g., a printer, a facsimile machine, a multifunction peripheral/product/printer (MFP: a digital MFP), a scanner), a projector, an interactive whiteboard (IWB: an electronic whiteboard having a blackboard function to enable mutual communication), digital signage, a head-up display (HUD) device, an industrial machine, an imaging device, a sound collecting device, a medical device, a networked home appliance, an automobile (connected car), a laptop personal computer (PC), a mobile phone, a smartphone, a tablet terminal, a game console, a personal digital assistant (PDA), a digital camera, a wearable PC, and a desktop PC.

The configuration of the federated learning system 1000 illustrated in FIG. 1 is given by way of example. The federated learning system 1000 may have another configuration. For example, the central apparatus 10, the client apparatus 20, or the client apparatus 30 may be implemented by a single information processing apparatus or may be implemented by a plurality of information processing apparatuses. For example, the central storage device 15 may be built in the central apparatus 10. The client storage device 25 may be built in the client apparatus 20. The client storage device 35 may be built in the client apparatus 30. The federated learning system 1000 may include various types of apparatuses each of which performs at least one of input and output of electronic data, and these apparatuses may use various services provided by the federated learning system 1000.

### Hardware Configuration of Federated Learning System

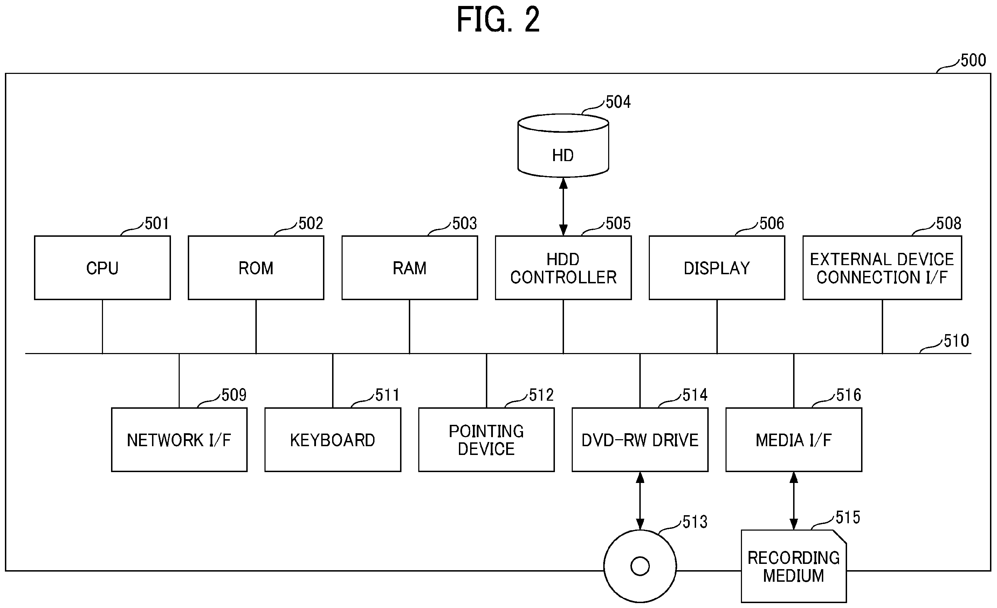

The hardware configuration of each apparatus included in the federated learning system 1000 is described below with reference to FIG. 2. Each of the central apparatus 10, the client apparatus 20, and the client apparatus 30 included in the federated learning system 1000 may be implemented by, for example, a computer. FIG. 2 is a block diagram illustrating a hardware configuration of a computer 500.

As illustrated in FIG. 2, the computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disc-rewritable (DVD-RW) 514, and a media I/F 516.

The CPU 501 controls the overall operation of the computer 500. The ROM 502 stores a program such as an initial program loader (IPL) used for booting the CPU 501. The RAM 503 is used as a work area for the CPU 501. The HD 504 stores various data such as a program. The HDD controller 505 controls the reading or writing of data from or to the HD 504 under the control of the CPU 501.

The display 506 displays various information such as a cursor, a menu, a window, characters, and images. The external device connection I/F 508, which may be implemented by an interface circuit, is an interface for connection with various external devices. Examples of the external devices include, but are not limited to, a universal serial bus (USB) memory and a printer. The network I/F 509, which may be implemented by an interface circuit, is an interface that enables data communication through the communication network N1. The bus line 510 is, for example, an address bus or a data bus, which electrically connects the components or elements such as the CPU 501 illustrated in FIG. 2 to each other.

The keyboard 511 is an example of an input device provided with a plurality of keys used for, for example, inputting characters, numerical values, and various instructions. The pointing device 512 is an example of an input device used for, for example, selecting or executing various instructions, selecting an object to be processed, and moving a cursor being displayed. The DVD-RW drive 514 controls the reading or writing of various data from or to a DVD-RW 513, which is an example of a removable recording medium. The removable recording medium is not limited to a DVD-RW and may be, for example, a digital versatile disc-recordable (DVD-R). The media I/F 516 controls the reading or writing (storing) of data from or to (in) a recording medium 515 such as a flash memory.

### Functional Configuration of Federated Learning System

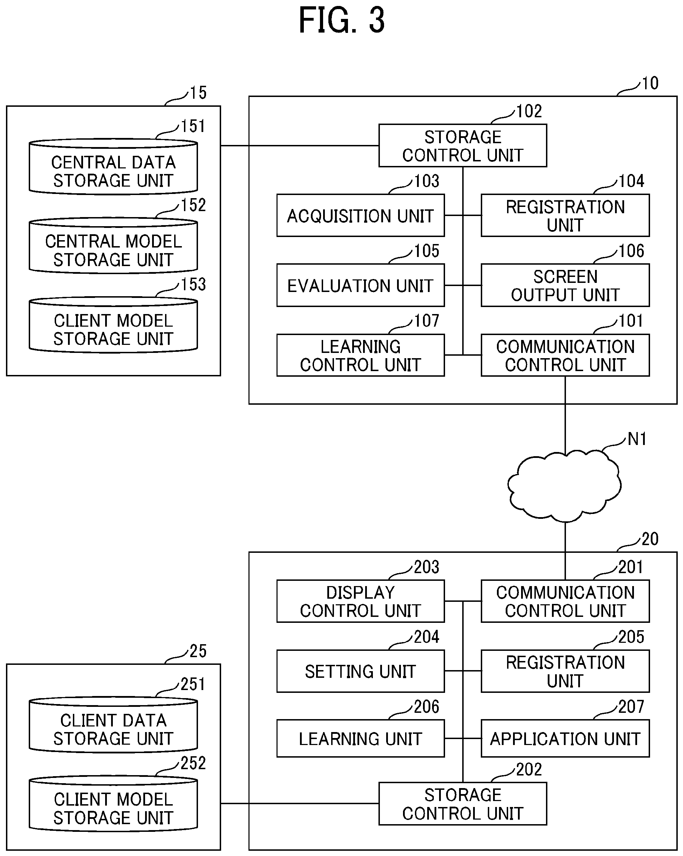

A functional configuration of the federated learning system 1000 is described below with reference to FIG. 3. FIG. 3 is a block diagram illustrating the functional configuration of the federated learning system 1000.

### Central Storage Device

As illustrated in FIG. 3, the central storage device 15 includes a central data storage unit 151, a central model storage unit 152, and a client model storage unit 153.

The central data storage unit 151 stores central data. The central data is data that the central apparatus 10 uses for executing various processes. The central data includes client-related information on the client model.

The client-related information is information on the client model or the general-purpose model in the federated learning. The general-purpose model is a client model generated based on the general-purpose data set. The client-related information may also be generated based on information registered by the user of the client apparatus 20. The client-related information may include data to be provided to the client apparatus 20 used for selecting a federation partner. The client-related information may include, for example, a business type, a task type, the number of data items, a data set, and feature data of the data set.

The business type may be a business type for which a task is executed by the client apparatus 20. The client-related information may include at least one of a business operation and a purpose of use instead of or in addition to the business type. The business operation may be a business operation for which the data set is used. The purpose of use may be the purpose of using the trained model.

Examples of the business type include retail, wholesale, food, communications, agriculture, forestry, mining, manufacturing, construction, transportation, finance, insurance, medical care, welfare, and services. Examples of the business operation include research, development, production, sales, customer service, survey, and daily report creation. Examples of the purpose of use include prediction of stock prices, prediction of energy demand, and detection of an object.

The task type is a classification of the task that the trained model executes. Examples of the task type include regression, classification, and clustering. Also, a classification obtained by subdividing these examples may be used as the task type. For example, the task type of the classification may be subdivided into a negative/positive classification or a topic classification. The negative/positive classification refers to the task of classifying data subjected to classification as positive or negative information. The topic classification refers to the task of classifying data subjected to classification based on the types of topics contained in the data.

The number of data items refers to the number of pieces of data subjected to learning included in the data set. The data set is a collection of data in which the data subjected to learning and a label that is a correct value for the data subjected to learning are associated with each other. The label may be predetermined in accordance with the task.

The feature data refers to data indicating the feature of the data set. The feature data may include one or more feature values related to the data set. The feature data may include a feature value indicating the feature of the entirety of the data set. The feature value indicating the feature of the entirety of the data set may include, for example, a feature value indicating the distribution of data in the data set. The feature data may include a feature value indicating the feature of the label included in the data set. The feature value indicating the feature of the label may include a feature value for each label. The feature value for each label may be, for example, an embedding vector representing the label or data associated with the label.

The central model storage unit 152 stores a central model. The central model stored in the central model storage unit 152 is a central model generated by a learning control unit 107 of the central apparatus 10.

The client model storage unit 153 stores a client model. The client model stored in the client model storage unit 153 is a client model generated by a learning unit 206 of the client apparatus 20.

### Central Apparatus

As illustrated in FIG. 3, the central apparatus 10 includes a communication control unit 101, a storage control unit 102, an acquisition unit 103, a registration unit 104, an evaluation unit 105, a screen output unit 106, and the learning control unit 107.

The communication control unit 101, the storage control unit 102, the acquisition unit 103, the registration unit 104, the evaluation unit 105, the screen output unit 106, and the learning control unit 107 are implemented by, for example, processing executed by the CPU 501 according to a program loaded from the HD 504 to the RAM 503 illustrated in FIG. 2.

The communication control unit 101 controls communication with the client apparatus 20. The communication control unit 101 may receive the client-related information from the client apparatus 20. The communication control unit 101 may transmit screen data to the client apparatus 20. The communication control unit 101 may transmit the central model to the client apparatus 20. The communication control unit 101 may receive the client model from the client apparatus 20.

The storage control unit 102 controls the storage of data in the central storage device 15. The storage control unit 102 may write a trained client model or the client-related information received from the client apparatus 20 in the central storage device 15. The storage control unit 102 may write a trained central model generated by the learning control unit 107 in the central storage device 15. The storage control unit 102 may read out, from the central storage device 15, a trained model to be transmitted to the client apparatus 20.

The acquisition unit 103 acquires various data from the client apparatus 20. The acquisition unit 103 may acquire the client model or the client-related information from the client apparatus 20. The acquisition unit 103 may acquire client-related information that includes one or more feature values selected by the client apparatus 20. The feature values included in the client-related information may be selected based on a security policy set by the client apparatus 20.

The registration unit 104 registers the general-purpose model. The registration unit 104 may receive a general-purpose model addition application from the client apparatus 20. The registration unit 104 may generate client-related information on the general-purpose model based on the general-purpose model addition application. The feature data of the client-related information on the general-purpose model may include all available feature values.

The evaluation unit 105 evaluates the degree of similarity of the client-related information. The evaluation unit 105 may evaluate the degree of similarity of the client-related information based on the feature data included in the client-related information. For example, the evaluation unit 105 may calculate the degree of cosine similarity between pieces of feature data to evaluate the degree of similarity of the client-related information. The evaluation unit 105 may evaluate the degree of similarity of the client-related information based on other information (e.g., the business type, the business operation, the purpose of use, the task type, or the number of data items) included in the client-related information.

The evaluation unit 105 may evaluate the degree of similarity of the client-related information in response to a request from the client apparatus 20. The evaluation unit 105 may evaluate the degree of similarity between the client-related information on the client apparatus 20 of the request source and the client-related information on another client apparatus 20. The client-related information on the other client apparatus 20 may include client-related information on the general-purpose model. When evaluating the degree of similarity between the respective pieces of the client-related information on the client apparatuses 20, the evaluation unit 105 may evaluate the degree of similarity using the feature values commonly included in each piece of the client-related information.

The screen output unit 106 outputs screen data for displaying various screens on the client apparatus 20. The screen data is, for example, screen data described in a hypertext markup language (HTML). The screen data may include, for example, an application described in JavaScript^{®}. The screen data output by the screen output unit 106 is transmitted to the client apparatus 20 by the communication control unit 101.

The screen output unit 106 may output screen data for displaying a general-purpose model addition application screen. The general-purpose model addition application screen is a screen used for requesting, from the client apparatus 20 to the central apparatus 10, the addition of a general-purpose model.

The screen output unit 106 may output screen data for displaying a federation model selection screen. The federation model selection screen is a screen used for selecting, from among partner candidates, a partner whose model is to be used for the federated learning. The models of the partner candidates for the federated learning may include client models (federation partner models) generated by the respective client apparatuses 20-1 to 20-N included in the federated learning system 1000 or a general-purpose model. On the federation model selection screen, the federation partner models and the general-purpose model may be displayed to allow selection of either one type of model or both.

The screen output unit 106 may generate screen data for displaying the federation model selection screen, based on the degree of similarity of the client-related information evaluated by the evaluation unit 105. For example, the screen output unit 106 may generate screen data for displaying the federation model selection screen that allows selection of one or more of the client apparatuses 20 whose client-related information has a degree of similarity equal to or greater than a predetermined threshold value. In still another example, the screen output unit 106 may generate screen data for displaying the federation model selection screen that presents information on the client apparatus 20 and the degree of similarity of the client-related information in association with each other. In still another example, the screen output unit 106 may generate screen data for displaying the federation model selection screen that presents the information on the client apparatus 20 in descending order of the degree of similarity of the client-related information.

The learning control unit 107 controls the federated learning. The learning control unit 107 may distribute an initial model to the client apparatus 20. The initial model is the central model in the initial state. The learning control unit 107 may acquire the trained client model from the client apparatus 20. The learning control unit 107 may generate a trained central model based on the trained client model. The learning control unit 107 may distribute the trained central model to the client apparatus 20. The learning control unit 107 may repeatedly execute the federated learning until an end condition for ending the federated learning is satisfied.

### Client Storage Device

As illustrated in FIG. 3, the client storage device 25 includes a client data storage unit 251 and a client model storage unit 252.

The client data storage unit 251 stores client data. The client data is data that the client apparatus 20 uses for executing various processes. The client data includes a data set used for learning the client model.

The client model storage unit 252 stores the client model. The client model is the trained client model generated by the learning unit 206 of the client apparatus 20.

### Client Apparatus

As illustrated in FIG. 3, the client apparatus 20 includes a communication control unit 201, a storage control unit 202, a display control unit 203, a setting unit 204, a registration unit 205, the learning unit 206, and an application unit 207.

The communication control unit 201, the storage control unit 202, the display control unit 203, the setting unit 204, the registration unit 205, the learning unit 206, and the application unit 207 are implemented by, for example, processing executed by the CPU 501 according to a program loaded from the HD 504 to the RAM 503 illustrated in FIG. 2.

The communication control unit 201 controls communication with the central apparatus 10. The communication control unit 201 may transmit the client-related information to the central apparatus 10. The communication control unit 201 may receive the screen data from the central apparatus 10. The communication control unit 201 may receive the central model from the central apparatus 10. The communication control unit 201 may transmit the client model to the central apparatus 10.

The storage control unit 202 controls the storage of data in the client storage device 25. The storage control unit 202 may read out the data set used for learning the client model from the client storage device 25. The storage control unit 202 may write the trained client model generated by the learning unit 206 in the client storage device 25. The storage control unit 202 may read out, from the client storage device 25, the client model to be transmitted to the client apparatus 20.

The display control unit 203 controls the display of various screens on the display 506 based on the screen data received from the central apparatus 10. The display control unit 203 may control the display of the general-purpose model addition application screen on the display 506 based on the screen data of the general-purpose model addition application screen. The display control unit 203 may control the display of the federation model selection screen on the display 506 based on the screen data of the federation model selection screen.

The setting unit 204 sets a security policy for data to be registered in the central apparatus 10. The security policy may include a scope in which the client model is permitted to be shared or an access level to the client model. The security policy may include information indicating the type of feature value to be included in the feature data of the client-related information.

The registration unit 205 registers the client model in the central apparatus 10. The registration unit 205 may generate client-related information on the client model and transmit the client-related information to the central apparatus 10. The registration unit 205 may calculate feature data of the data set based on the client data read from the client storage device 25. The registration unit 205 may select the feature value to be included in the feature data based on the security policy set by the setting unit 204.

The registration unit 205 may, for example, calculate the distribution of the data included in the data set and generate a feature value indicating the feature of the distribution. The registration unit 205 may generate an embedding vector representing a label or data included in the data set, based on a language model such as term frequency-inverse document frequency (TF-IDF), word-to-vector (word2vec), or bidirectional encoder representations from transformers (BERT).

The learning unit 206 generates a trained client model based on the client data read out from the client storage device 25. The learning unit 206 may learn client data for the central model received from the central apparatus 10 according to a predetermined learning algorithm to generate a trained client model.

The application unit 207 deploys the trained model. The application unit 207 may select a trained model to be deployed out of the trained central model and the trained client model. The application unit 207 may use the deployed trained model to execute a predetermined task.

### Process of Federated Learning Method

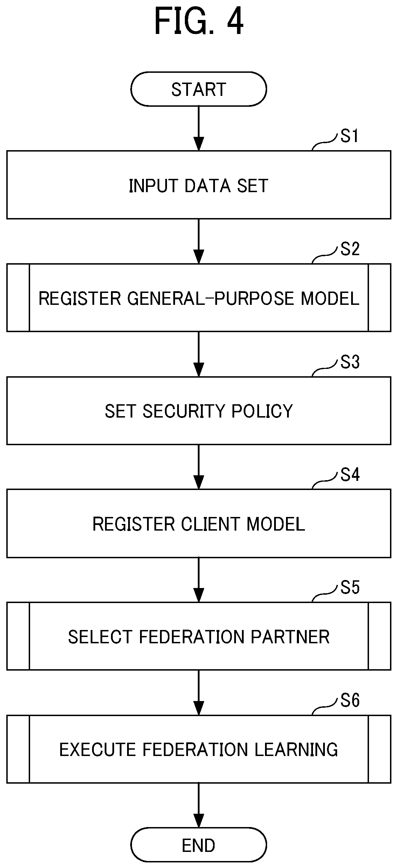

A federated learning method executed by the federated learning system 1000 is described below with reference to FIGs. 4 to 12. FIG. 4 is a flowchart of the federated learning method.

In step S1, the registration unit 205 of the client apparatus 20 receives an input of a data set. The registration unit 205 may receive an input of a part of the client-related information together with the data set. For example, the registration unit 205 may receive an input of the business type, the business operation, the purpose of use, or the task type. The registration unit 205 transfers the received data set and part of the client-related information to the storage control unit 202. The storage control unit 202 controls the storage of the data set and the part of the client-related information in the client data storage unit 251 of the client storage device 25.

In step S2, the registration unit 104 of the central apparatus 10 registers the general-purpose model in response to a request from the client apparatus 20. Specifically, the registration unit 104 receives a general-purpose model addition application from the client apparatus 20 and acquires the general-purpose data set indicated in the application. The registration unit 104 generates client-related information on the general-purpose model based on the acquired general-purpose data set. The registration unit 104 transfers the generated client-related information to the storage control unit 102. The storage control unit 102 controls the storage of the client-related information on the general-purpose model in the central data storage unit 151 of the central storage device 15.

### Registration Process of General-Purpose Model

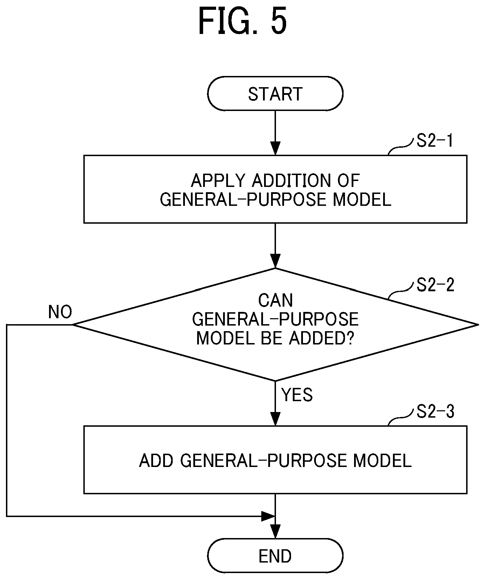

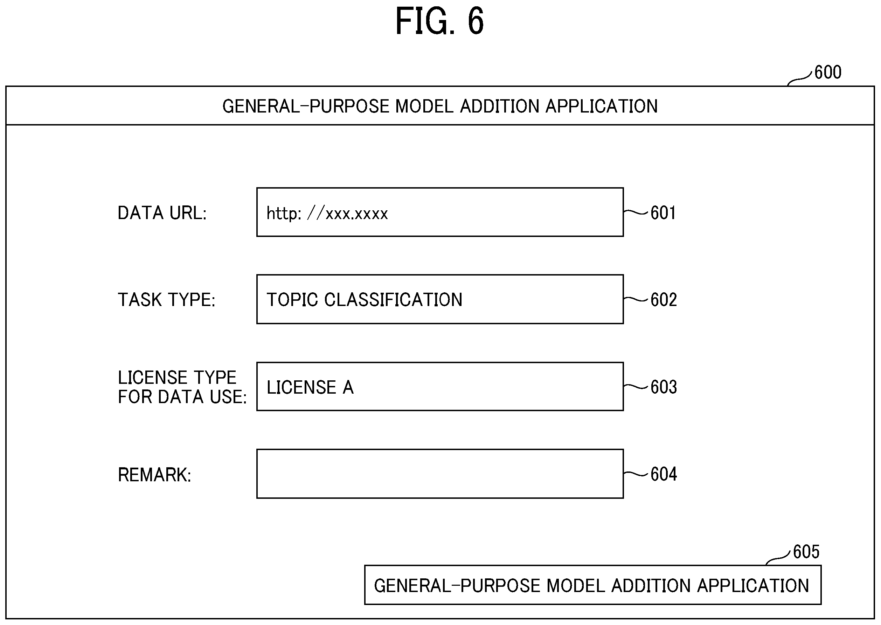

A registration process of the general-purpose model (i.e., the process of step S2 in FIG. 4) is described in more detail below with reference to FIGs. 5 and 6. FIG. 5 is a flowchart of the registration process of the general-purpose model.

In step S2-1, the display control unit 203 of the client apparatus 20 requests the central apparatus 10 to provide the general-purpose model addition application screen. In response to the request from the client apparatus 20, the screen output unit 106 of the central apparatus 10 generates screen data for displaying the general-purpose model addition application screen. The screen output unit 106 transfers the generated screen data to the communication control unit 101. The communication control unit 101 transmits to the client apparatus 20 the screen data for displaying the general-purpose model addition application screen.

In the client apparatus 20, the communication control unit 201 receives the screen data for displaying the general-purpose model addition application screen from the central apparatus 10. The display control unit 203 controls the display of the general-purpose model addition application screen on the display 506 based on the screen data received by the communication control unit 201. The display control unit 203 transmits a general-purpose model addition application to the central apparatus 10 in response to an operation on the general-purpose model addition application screen.

### General-Purpose Model Addition Application Screen

FIG. 6 is a diagram illustrating a general-purpose model addition application screen 600. As illustrated in FIG. 6, the general-purpose model addition application screen 600 includes a location information input field 601, a task type input field 602, a use condition input field 603, a remark input field 604, and an application button 605 for adding a general-purpose model.

The location information input field 601 is a region used for inputting location information indicating a location where the general-purpose data set is available. The location information may indicate, for example, a uniform resource locator (URL) where the general-purpose data set is publicly available. The task type input field 602 is a region used for inputting a task type to which the general-purpose data set is applied. The use condition input field 603 is a region used for inputting a use condition such as license information for using the general-purpose data set. The remark input field 604 is a region used for inputting additional information on the general-purpose data set or the application for use. The application button 605 is a button used for transmitting the general-purpose model addition application to the central apparatus 10.

Referring back to FIG. 5, the description continues. In step S2-2, the registration unit 104 of the central apparatus 10 receives the general-purpose model addition application from the client apparatus 20. An administrator of the federated learning system 1000 determines whether to permit the addition of the general-purpose model based on the general-purpose model addition application. In the case where the administrator determines to permit the addition of the general-purpose model (YES in step S2-2), the registration unit 104 advances the process to step S2-3. On the other hand, in the case where the administrator determines not to permit the addition of the general-purpose model (NO in step S2-2), the registration unit 104 skips the process of step S2-3 and ends the registration process of the general-purpose data.

The administrator of the federated learning system 1000 may determine whether to permit the addition of the general-purpose model, for example, according to the following criteria. However, these criteria are given by way of example. The determination of whether to permit the addition of the general-purpose model may be made according to other criteria.
- Check whether commercial use is permitted: Check the license information for the general-purpose data set to determine whether commercial use is permitted. Check whether the restrictions on use under the license (e.g., permission for redistribution or modification of the data) are satisfied.
- Check security and privacy: Confirm that the general-purpose data set does not contain personal information. Confirm that, when the general-purpose data set contains personal information, the personal information is appropriately anonymized.
- Check data quality: Confirm that there are no missing or abnormal values in the general-purpose data set. Evaluate the performance when learning is performed only with the general-purpose data set to be used for additional determination and confirm that an appropriate classification label is assigned.
- Check task versatility: Check whether the label assigned to the general-purpose data set is versatile and whether the federation with the model is expected to be effective.

In step S2-3, the registration unit 104 of the central apparatus 10 acquires the general-purpose data set based on the general-purpose model addition application. The registration unit 104 generates client-related information on the general-purpose model based on the acquired general-purpose data set. The registration unit 104 transfers the generated client-related information to the storage control unit 102. The storage control unit 102 controls the storage of the client-related information on the general-purpose model in the central data storage unit 151 of the central storage device 15.

The administrator of the federated learning system 1000 configures the client apparatus 20 and the client storage device 25 for learning a client model using the added general-purpose data set and adds the configured client apparatus 20 and client storage device 25 to the federated learning system 1000. In response to an operation performed by the administrator of the federated learning system 1000, the added general-purpose data set is acquired and stored in the added client storage device 25.

Referring back to FIG. 4, the description continues. In step S3, the setting unit 204 of the client apparatus 20 sets a security policy. For example, the setting unit 204 may cause a screen used for setting a security policy to be displayed on the display 506 and set the security policy in response to an operation on the screen performed by the user of the client apparatus 20.

In step S4, the registration unit 104 of the central apparatus 10 registers the client model in response to a request from the client apparatus 20. Specifically, the storage control unit 202 of the client apparatus 20 reads out the data set and the part of the client-related information registered in step S1 from the client data storage unit 251 of the client storage device 25. The storage control unit 202 transfers the read out data set and part of the client-related information to the registration unit 205. The registration unit 205 generates feature data of the data set. At this time, the registration unit 205 selects a feature value to be included in the feature data based on the type of the feature value indicated in the security policy set in step S3.

The registration unit 205 includes the feature data of the data set in the part of the client-related information to generate client-related information on the client model. The registration unit 205 transfers the generated client-related information to the communication control unit 201. The communication control unit 201 transmits the client-related information to the central apparatus 10.

In the central apparatus 10, the communication control unit 201 receives the client-related information from the client apparatus 20. The communication control unit 201 transfers the received client-related information to the storage control unit 202. The storage control unit 202 controls the storage of the client-related information in the central data storage unit 151 of the central storage device 15.

In step S5, the display control unit 203 of the client apparatus 20 receives a selection of a federation partner. Specifically, the display control unit 203 of the client apparatus 20 controls the display of the federation model selection screen on the display 506 and receives the selection of the client apparatus 20 as the federation partner in response to an operation on the federation model selection screen.

### Selection Process of Federation Partner

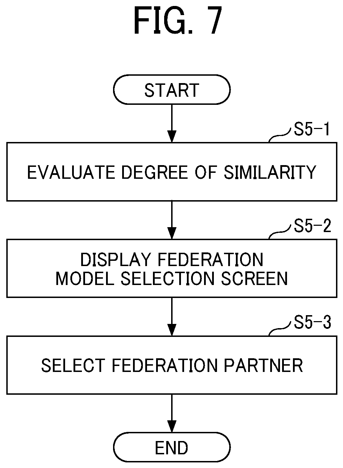

A selection process of a federation partner (i.e., the process of step S5 in FIG. 4) is described in more detail below with reference to FIGs. 7 to 11. FIG. 7 is a flowchart of the selection process of a federation partner.

In step S5-1, the display control unit 203 of the client apparatus 20 requests the central apparatus 10 to provide the federation model selection screen. In the central apparatus 10, the storage control unit 202 reads out the client-related information from the central data storage unit 151 of the central storage device 15 in response to the request from the client apparatus 20. The storage control unit 202 transfers the read out client-related information to the evaluation unit 105.

The evaluation unit 105 evaluates the degree of similarity between the client-related information on the client apparatus 20 of the request source and the client-related information on another client apparatus 20. The evaluation unit 105 transfers the evaluated degree of similarity of the client-related information to the screen output unit 106.

The screen output unit 106 generates screen data for displaying the federation model selection screen, based on the degree of similarity of the client-related information evaluated by the evaluation unit 105. The screen output unit 106 embeds the client-related information and the degree of similarity of the client-related information in association with each other in the screen data for displaying the federation model selection screen. The screen output unit 106 transfers the generated screen data to the communication control unit 101. The communication control unit 101 transmits to the client apparatus 20 the screen data for displaying the federation model selection screen.

In the client apparatus 20, the communication control unit 201 receives the screen data for displaying the federation model selection screen from the central apparatus 10. The display control unit 203 controls the display of the federation model selection screen on the display 506 based on the screen data received by the communication control unit 201.

### Federation Model Selection Screen

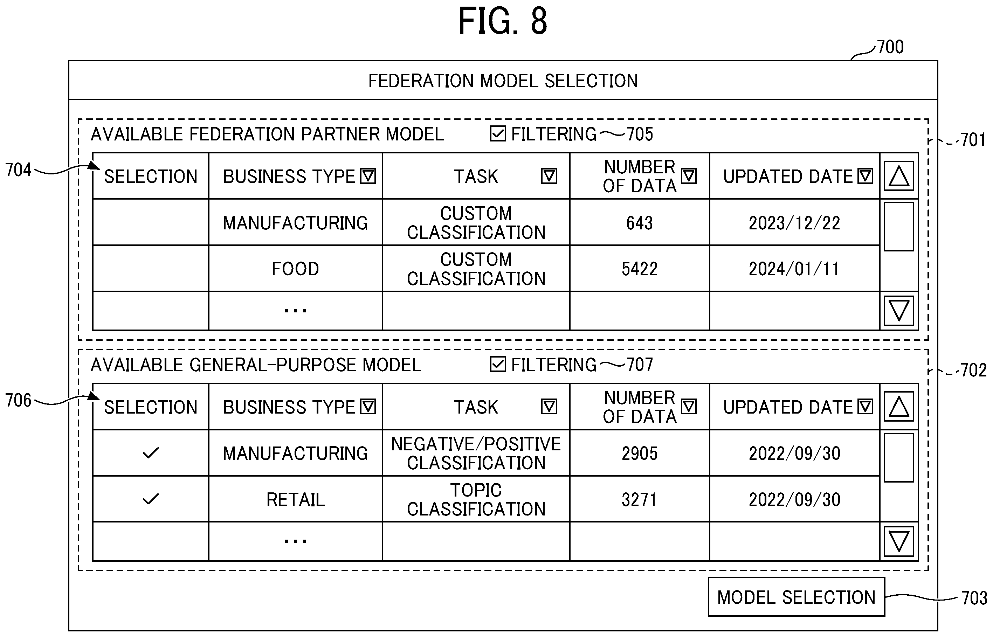

FIG. 8 is a diagram illustrating a first example of a federation model selection screen 700. As illustrated in FIG. 8, the federation model selection screen 700 includes a client model display section 701, a general-purpose model display section 702, and a selection button 703.

In the client model display section 701, pieces of client-related information on client models are displayed. In the client model display section 701, for example, the business type, the task type, the number of data items, and the updated date may be displayed. The business type, the task type, and the number of data items are included in the client-related information. The updated date is the date and time when the client model is last updated.

The client model display section 701 includes a selection field 704 and a filtering field 705. The selection field 704 is a screen component used for selecting, as federation partners, one or more of the client apparatuses 20 that have generated the respective client models. The filtering field 705 is a screen component used for switching whether to enable filtering of the client model to be displayed in the client model display section 701.

The filtering is a function that displays only those client models that are expected to increase the accuracy of the model when selected as federation partners. Specifically, the filtering is a function that displays only client models whose client-related information has a degree of similarity equal to or greater than the predetermined threshold value and does not display client models whose client-related information has the degree of similarity smaller than the predetermined threshold value.

The filtering may be performed based on criteria set by the user of the client apparatus 20. For example, the criteria for the filtering may include the type of similarity used for filtering and a threshold value for the degree of each similarity. As the type of similarity, the feature value included in the feature data may be specified. For example, the type of similarity may include similarity of the entirety of the data set, similarity of labels, and similarity of data for each label. The type of similarity may be a combination of multiple types of similarities.

In the general-purpose model display section 702, pieces of client-related information on general-purpose models are displayed. In the general-purpose model display section 702, for example, as in the client model display section 701, the business type, the task type, the number of data items, and the updated date may be displayed. Since the general-purpose data set is a data set of which data does not need to be concealed, the details of the labels or data included in the general-purpose data set may be displayed in the general-purpose model display section 702.

The general-purpose model display section 702 includes a selection field 706 and a filtering field 707. The selection field 706 is a screen component used for selecting, as federation partners, one or more of the client apparatuses 20 that have generated the respective general-purpose models. The filtering field 707 is a screen component used for switching whether to enable filtering of the general-purpose model to be displayed in the general-purpose model display section 702. The function of the filtering field 707 may be substantially the same as that of the filtering field 705.

The selection button 703 is a button used for confirming the selection of one or more federation partners. When the user of the client apparatus 20 presses the selection button 703, one or more of the client apparatuses 20 having generated the respective client models selected in the selection field 704 and one or more of the client apparatuses 20 having generated the respective general-purpose models selected in the selection field 706 are selected as federation partners.

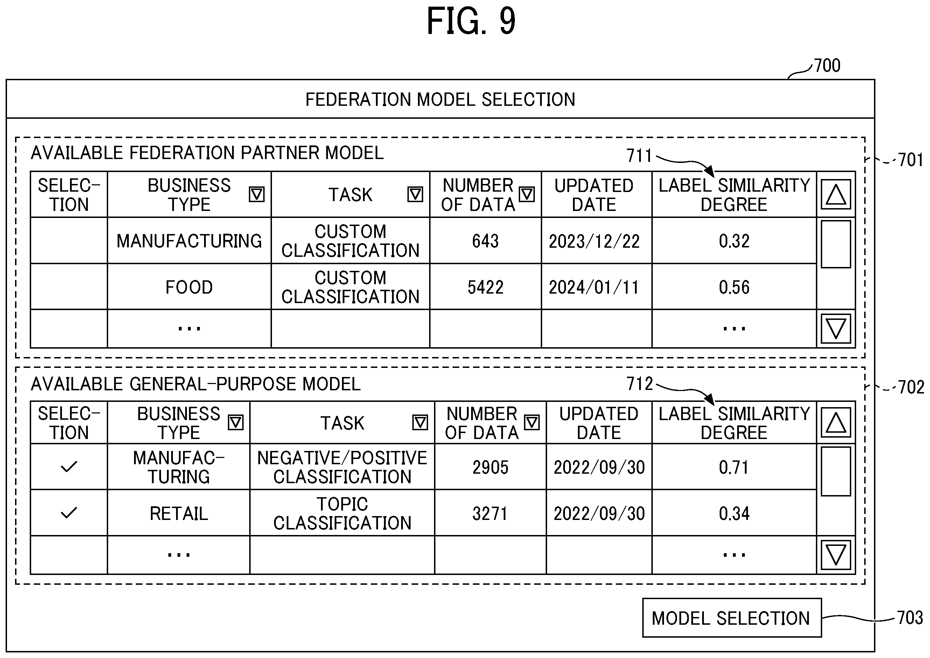

FIG. 9 is a diagram illustrating a second example of the federation model selection screen 700. As illustrated in FIG. 9, a label similarity degree 711 may be displayed in the client model display section 701 on the federation model selection screen 700. Also, a label similarity degree 712 may be displayed in the general-purpose model display section 702 on the federation model selection screen 700. In other words, on the federation model selection screen 700, the client-related information and the degree of similarity of the client-related information may be displayed in association with each other. In FIG. 9, the degree of similarity of a label is displayed as an example of the degree of similarity of the client-related information. However, the degree of similarity of another feature may be displayed or the degrees of similarities of multiple features may be displayed.

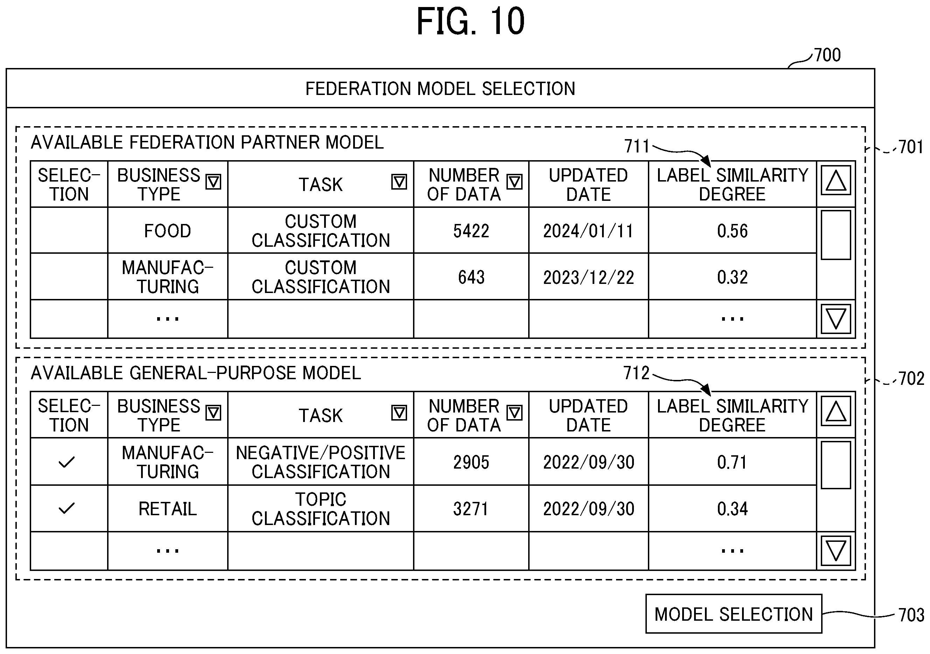

FIG. 10 is a diagram illustrating a third example of the federation model selection screen 700. As illustrated in FIG. 10, the pieces of client related information may be arranged in descending order of the label similarity degree 711 and displayed in the client model display section 701 on the federation model selection screen 700. Also, the pieces of client related information may be arranged in descending order of the label similarity degree 712 and displayed in the general-purpose model display section 702 on the federation model selection screen 700. In FIG. 10, the pieces of client related information are arranged in descending order of the degree of similarity and displayed. However, the pieces of client related information may be arranged in ascending order of the degree of similarity and displayed, or the order may be switchable between the descending and the ascending.

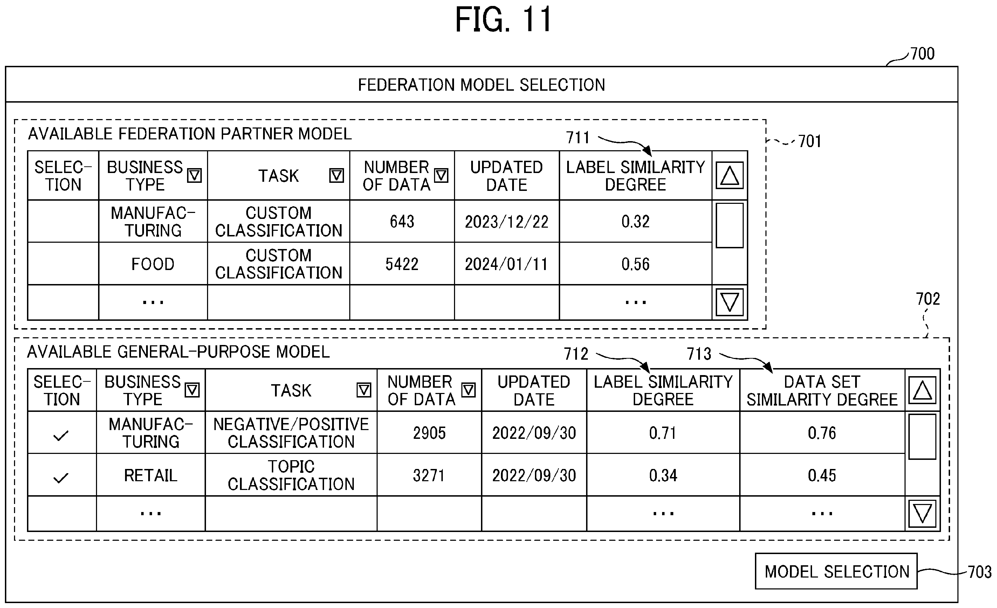

FIG. 11 is a diagram illustrating a fourth example of the federation model selection screen 700. As illustrated in FIG. 11, on the federation model selection screen 700, the label similarity degree 711 may be displayed in the client model display section 701 and the label similarity degree 712 and a data set similarity degree 713 may be displayed in the general-purpose model display section 702. In other words, the types of similarities of the client-related information displayed on the federation model selection screen 700 may be different for the client model and the general-purpose model.

Referring back to FIG. 7, the description continues. In step S5-3, the learning unit 206 of the client apparatus 20 receives selection of one or more federation partners in response to an operation on the federation model selection screen 700. Specifically, when the selection button 703 on the federation model selection screen 700 is pressed, the learning unit 206 selects, as federation partners, one or more of the client apparatuses 20 having generated the respective client models selected in the selection field 704 and one or more of the client apparatuses 20 having generated the respective general-purpose models selected in the selection field 706 on the federation model selection screen 700. The learning unit 206 transmits information indicating the selected federation partners to the central apparatus 10.

Referring back to FIG. 4, the description continues. In step S6, the learning control unit 107 of the central apparatus 10 executes the federated learning. The federated learning is executed among the central apparatus 10, the client apparatus 20 that has selected the federation partners in step S5, and the client apparatuses 20 selected as the federation partners in step S5.

In the federated learning, the learning unit 206 of the client apparatus 20 and the learning control unit 107 of the central apparatus 10 repeatedly generate, respectively, a trained client model and a trained central model until an end condition is satisfied. When the federated learning is ended, the application unit 207 of the client apparatus 20 deploys the trained model. The application unit 207 executes a predetermined task using the deployed trained model.

### Process of Federated Learning

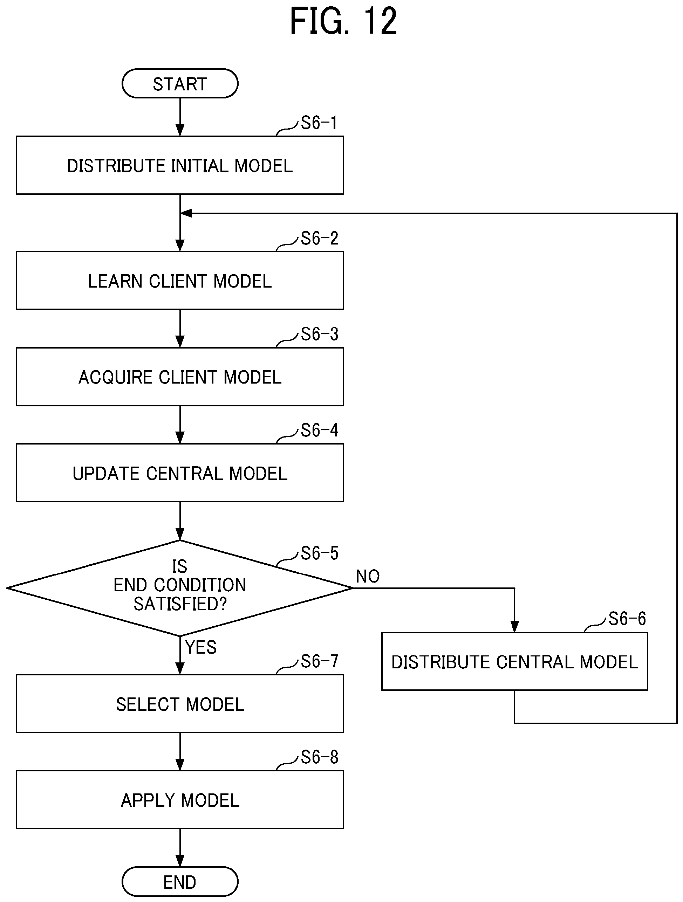

A process of the federated learning (i.e., the process of step S6 in FIG. 4) is described in more detail below with reference to FIG. 12. FIG. 12 is a flowchart of the process of the federated learning.

In step S6-1, the learning control unit 107 of the central apparatus 10 generates an initial model. The learning control unit 107 transfers the generated initial model to the communication control unit 101. The communication control unit 101 distributes the initial model to each of the client apparatuses 20 participating in the federated learning.

In the client apparatus 20, the communication control unit 201 receives the initial model from the central apparatus 10. The storage control unit 202 controls the storage of the initial model received by the communication control unit 201 in the client model storage unit 252 of the client storage device 25.

In step S6-2, the storage control unit 202 of the client apparatus 20 reads out the initial model from the client model storage unit 252 of the client storage device 25. The storage control unit 202 also reads out the client data from the client data storage unit 251 of the client storage device 25.

The learning unit 206 of the client apparatus 20 learns the client data for the initial model according to a predetermined learning algorithm. Thus, a trained client model is generated. The learning unit 206 transfers the trained client model to the communication control unit 201 and the storage control unit 202. The learning unit 206 may evaluate the trained client model using the client data (or a part thereof) and transfer the trained client model together with the evaluation result to the communication control unit 201 and the storage control unit 202.

In step S6-3, the communication control unit 201 of the client apparatus 20 receives the trained client model from the learning unit 206. The communication control unit 201 transmits the trained client model to the central apparatus 10. The communication control unit 201 may transmit the evaluation result to the central apparatus 10 together with the trained client model. The storage control unit 202 controls the storage of the trained client model received from the learning unit 206 in the client model storage unit 252 of the client storage device 25. The storage control unit 202 may control the evaluation result to be stored together with the trained client model in the client model storage unit 252 of the client storage device 25.

In the central apparatus 10, the communication control unit 101 receives the client model from each of the client apparatuses 20. The storage control unit 102 controls the storage of the multiple client models received by the communication control unit 101 in the client model storage unit 153 of the central storage device 15. When the evaluation result is received together with the client model, the storage control unit 102 may control only the client models evaluated as good to be stored in the client model storage unit 153 of the central storage device 15.

In step S6-4, the learning control unit 107 of the central apparatus 10 reads out the multiple client models generated by the respective client apparatuses 20 from the client model storage unit 153 of the central storage device 15. The learning control unit 107 integrates the read out multiple client models. Thus, a central model is newly generated. The learning control unit 107 transfers the central model newly generated by the integration to the storage control unit 102. The storage control unit 102 controls the storage of the central model newly generated in the central model storage unit 152 of the central storage device 15.

In step S6-5, the central apparatus 10 determines whether the end condition is satisfied. The end condition is a condition to be satisfied to end the update of the central model. The end condition may be, for example, that the difference before and after the update has converged, or that the number of times of the update reaches a predetermined number. In the case where it is determined that the end condition is not satisfied (NO in step S6-5), the central apparatus 10 advances the process to step S6-6. On the other hand, in the case where it is determined that the end condition is satisfied (YES in step S6-5), the central apparatus 10 advances the process to step S6-7.

In step S6-6, the storage control unit 102 of the central apparatus 10 reads out the central model from the central model storage unit 152 of the central storage device 15. The communication control unit 101 distributes the central model read out by the storage control unit 102 to each of the client apparatuses 20 participating in the federated learning.

After that, the federated learning system 1000 executes the processes from step S6-2 to step S6-4 again for the central model distributed in step S6-6. In this way, the federated learning system 1000 repeatedly executes the distribution of the central model, the learning of the client model, and the update of the central model until it is determined that the end condition is satisfied in step S6-5.

In step S6-7, the application unit 207 of the client apparatus 20 selects a trained model to be deployed out of the trained central model and the trained client models. The application unit 207 transmits a request signal for requesting transmission of the selected trained model to the central apparatus 10.

In the central apparatus 10, the communication control unit 101 receives the request signal from the client apparatus 20. The storage control unit 102 reads out, from the central model storage unit 152 or the client model storage unit 153 of the central storage device 15, the trained model indicated in the request signal received by the communication control unit 101. The communication control unit 101 transmits the trained model read out by the storage control unit 102 to the client apparatus 20.

In step S6-8, the communication control unit 201 of the client apparatus 20 receives the trained model from the central apparatus 10. The communication control unit 201 transfers the received trained model to the application unit 207. The application unit 207 causes the trained model to be stored in the client model storage unit 252 of the client storage device 25. The application unit 207 deploys the trained model. After that, the application unit 207 executes a predetermined task or business operation using the deployed trained model.

The central apparatus 10 acquires client-related information generated based on information registered by a client from the client apparatus 20, and outputs screen data for displaying a screen that allows selection of a federation partner, based on the degree of similarity of the client-related information. In one aspect of the present disclosure, since the screen allowing selection of a federation partner is displayed based on the degree of similarity of the client-related information, the federation partner can be appropriately selected.

In particular, in federated learning across different tasks, it is difficult to appropriately select a federation partner based only on, for example, the business type, the task type, or the number of data items. Since the screen allowing selection of a federation partner is displayed based on the degree of similarity of the client-related information, the federation partner for conducting the federated learning across the different tasks can be appropriately selected.

The central apparatus 10 may output screen data for displaying a screen that allows selection of one or more of the client apparatuses 20 whose client-related information has a degree of similarity equal to or greater than a threshold value. In one aspect of the present disclosure, since only the client apparatuses 20 whose client-related information has a high degree of similarity are displayed, the client apparatus 20 appropriate as the federation partner is easily selected.

The central apparatus 10 may output screen data for displaying a screen that presents information on the client apparatus 20 and the degree of similarity of the client-related information in association with each other. In one aspect of the present disclosure, since the degree of similarity of the client-related information is displayed for each of the client apparatuses 20, the client apparatus 20 appropriate as the federation partner is easily selected.

The central apparatus 10 may output screen data for displaying a screen that presents the information on the client apparatus 20 in descending order of the degree of similarity of the client-related information. In one aspect of the present disclosure, since the client apparatus 20 whose client-related information has a higher degree of similarity is displayed at a position where the item is easier to be visually recognized, the client apparatus 20 appropriate as the federation partner is easily selected.

The central apparatus 10 may acquire one or more pieces of feature data selected by the client apparatus 20. In one aspect of the present disclosure, the degree of similarity of the client-related information can be evaluated using only the feature data that satisfies the security policy of the client apparatus 20.

The feature data may include a feature value indicating the feature of the entirety of the data set. The feature value indicating the feature of the entirety of the data set may include a feature value indicating the distribution of the data in the data set. In one aspect of the present disclosure, the client apparatus 20 having a similar feature of the entirety of the data set can be selected as the federation partner.

The feature data may include a feature value indicating the feature of a label included in the data set. The feature value indicating the feature of the label may include an embedding vector representing the label or data associated with the label. In one aspect of the present disclosure, the client apparatus 20 having a similar feature of the label can be selected as the federation partner.

Each of the functions of the embodiments described above may be implemented by one or more processing circuits or circuitry. The "processing circuit or circuitry" herein includes a programmed processor to execute each function by software, such as a processor implemented by an electronic circuit, and devices, such as an application-specific integrated circuit (ASIC), a digital signal processor (DSP), a field-programmable gate array (FPGA), and circuit modules known in the art arranged to perform the recited functions.

The group of apparatuses or devices described in the above-described embodiments of the present disclosure are merely one example of a plurality of computing environments that implement embodiments of the present disclosure. In some embodiments, the central apparatus 10 or the client apparatus 20 includes multiple computing devices, such as a server cluster. The multiple computing devices communicate with one another through any type of communication link including, for example, a network or a shared memory, and perform the operations disclosed herein.

Aspects of the present disclosure are, for example, as follows.

According to Aspect 1, an information processing apparatus that communicates, via a network, with another information processing apparatus participating in federated learning includes an acquisition unit that acquires client-related information generated based on information registered by a client from the other information processing apparatus participating in the federated learning, an evaluation unit that evaluates the degree of similarity between the client-related information on the other information processing apparatus participating in the federated learning and the client-related information on one or more partner candidates for the federated learning, and a screen output unit that outputs screen data for displaying a screen that allows selection of one or more partners for the federated learning, based on the degree of similarity.

According to Aspect 2, in the information processing apparatus of Aspect 1, the screen output unit outputs the screen data for displaying the screen that allows the selection of the one or more partners from among the one or more partner candidates for the federated learning whose client-related information has a degree of similarity equal to or greater than a threshold value.

According to Aspect 3, in the information processing apparatus of Aspect 1 or 2, the screen output unit outputs the screen data for displaying the screen that presents information on the one or more partner candidates for the federated learning and the degree of similarity in association with each other.

According to Aspect 4, in the information processing apparatus of Aspect 3, the screen output unit outputs the screen data for displaying the screen that presents the information on the one or more partner candidates for the federated learning in descending order of the degree of similarity.

According to Aspect 5, in the information processing apparatus of any one of Aspects 1 to 4, the evaluation unit evaluates the degree of similarity in feature data related to a data set.

According to Aspect 6, in the information processing apparatus of Aspect 5, the acquisition unit acquires one or more pieces of the feature data selected by the other information processing apparatus participating in the federated learning.

According to Aspect 7, in the information processing apparatus of Aspect 5 or 6, the feature data includes a feature value indicating the feature of the entirety of the data set.

According to Aspect 8, in the information processing apparatus of Aspect 7, the feature value indicating the feature of the entirety of the data set includes a feature value indicating the distribution of data in the data set.

According to Aspect 9, in the information processing apparatus of any one of Aspects 5 to 8, the feature data includes a feature value indicating the feature of a label included in the data set.

According to Aspect 10, in the information processing apparatus of Aspect 9, the feature value indicating the feature of the label includes an embedding vector representing the label or data associated with the label.

According to Aspect 11, an information processing system includes a first information processing apparatus participating in federated learning and a second information processing apparatus. The two apparatuses communicate with each other via a network. The first information processing apparatus includes a communication control unit that transmits client-related information generated based on information registered by a client to the second information processing apparatus. The second information processing apparatus includes an acquisition unit that acquires the client-related information from the first information processing apparatus, an evaluation unit that evaluates the degree of similarity between the client-related information on the first information processing apparatus and the client-related information on one or more partner candidates for the federated learning, and a screen output unit that outputs screen data for displaying a screen that allows selection of one or more partners for the federated learning, based on the degree of similarity.

According to Aspect 12, an information processing method executed by a computer that communicates, via a network, with an information processing apparatus participating in federated learning includes acquiring client-related information generated based on information registered by a client from the information processing apparatus participating in the federated learning, evaluating the degree of similarity between the client-related information on the information processing apparatus participating in the federated learning and the client-related information on one or more partner candidates for the federated learning, and outputting screen data for displaying a screen that allows selection of one or more partners for the federated learning, based on the degree of similarity.

According to Aspect 13, a carrier medium carries computer readable code for controlling a computer system to carry out a method including acquiring, via a network, client-related information generated based on information registered by a client from an information processing apparatus participating in federated learning, evaluating the degree of similarity between the client-related information on the information processing apparatus participating in the federated learning and the client-related information on one or more partner candidates for the federated learning, and outputting screen data for displaying a screen that allows selection of one or more partners for the federated learning, based on the degree of similarity.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (10) configured to communicate, via a network, with another information processing apparatus (20) participating in federated learning, the apparatus comprising:
an acquisition unit (103) configured to acquire client-related information generated based on information registered by a client from the another information processing apparatus (20);
an evaluation unit (105) configured to evaluate a degree of similarity between the client-related information on the another information processing apparatus (20) and the client-related information on one or more partner candidates for the federated learning; and
an output unit (106) configured to output screen data for displaying a screen allowing selection of one or more partners for the federated learning, based on the degree of similarity.

2. The information processing apparatus (10) according to claim 1,
wherein the output unit (106) is configured to output the screen data for displaying the screen allowing the selection of the one or more partners from among the one or more partner candidates for the federated learning whose client-related information has the degree of similarity equal to or greater than a threshold.

3. The information processing apparatus (10) according to claim 1 or 2,
wherein the output unit (106) is configured to output the screen data for displaying the screen presenting information on the one or more partner candidates and the degree of similarity in association with each other.

4. The information processing apparatus (10) according to claim 3,
wherein the output unit (106) is configured to output the screen data for displaying the screen presenting the information on the one or more partner candidates in descending order of the degree of similarity.

5. The information processing apparatus (10) according to any one of claims 1 to 4,
wherein the evaluation unit (105) is configured to evaluate the degree of similarity in feature data related to a data set.

6. The information processing apparatus (10) according to claim 5,
wherein the acquisition unit (103) is configured to acquire one or more pieces of the feature data selected by the another information processing apparatus (20).

7. The information processing apparatus (10) according to claim 5 or 6,
wherein the feature data includes a feature value indicating a feature of an entirety of the data set.

8. The information processing apparatus (10) according to claim 7,
wherein the feature value indicating the feature of the entirety of the data set includes a feature value indicating distribution of data in the data set.

9. The information processing apparatus (10) according to any one of claims 5 to 8,
wherein the feature data includes a feature value indicating a feature of a label included in the data set.

10. The information processing apparatus (10) according to claim 9,
wherein the feature value indicating the feature of the label includes an embedding vector representing the label or data associated with the label.

11. An information processing system comprising:
the information processing apparatus (10) according to any one of claims 1 to 10; and
the another information processing apparatus (20) including a communication control unit (201) configured to transmit the client-related information generated based on the information registered by the client to the information processing apparatus (10).

12. An information processing method executed by a computer configured to communicate, via a network, with an information processing apparatus (20) participating in federated learning, the method comprising:
acquiring (S4) client-related information generated based on information registered by a client from the information processing apparatus (20);
evaluating (S5-1) a degree of similarity between the client-related information on the information processing apparatus (20) and the client-related information on one or more partner candidates for the federated learning; and
outputting (S5-2) screen data for displaying a screen allowing selection of one or more partners for the federated learning, based on the degree of similarity.

13. A carrier medium carrying computer readable code for controlling a computer system to carry out a method, the method comprising:
acquiring (S4), via a network, client-related information generated based on information registered by a client from an information processing apparatus (20) participating in federated learning;
evaluating (S5-1) a degree of similarity between the client-related information on the information processing apparatus (20) and the client-related information on one or more partner candidates for the federated learning; and
outputting (S5-2) screen data for displaying a screen allowing selection of one or more partners for the federated learning, based on the degree of similarity.
